# EUROPEAN PATENT APPLICATION

(11) **EP 4 480 824 A1**
(43) Date of publication of application: **25.12.2024**
(21) Application number: 24182636.1
(22) Date of filing: 17.06.2024
(51) Int. Cl.: B64D 15/12, B64D 33/02

(54) **CHORDWISE ICE PROTECTION HEATER**

(30) Priority: 16.06.2023 US 202318336446
(71) Applicant: Goodrich Corporation, Charlotte, NC 28217-4578 (US)
(72) Inventor: CHING, Nathaniel, Hartville, OH, 44632 (US); HU, Jin, Cary, NC, 27513 (US); BOTURA, Galdemir C., Copley, OH, 44321 (US); KESTLER, Steven, San Diego, CA, 92104 (US)
(74) Representative: Dehns

(57) **Abstract**

The present disclosure provides for ice protection heater assemblies, and related methods of fabrication and use. More particularly, the present disclosure provides for chordwise ice protection heater assemblies for aircraft or the like. The heater assemblies provide that the heater zones (14) for the ice protection heater assembly are designed such that the electricity mainly flows along the chord of the aircraft component (12) (e.g., wing). This puts the electrical connection points (16A, 16B) above and below as well as behind the stagnation point of the aircraft component. The electrical connection points are thus behind the area to be protected from icing via the heater assembly.

## Description

### TECHNICAL FIELD

The present invention relates to ice protection heater assemblies and related methods of fabrication and use and, more particularly, to chordwise ice protection heater assemblies for aircraft or the like.

### BACKGROUND

In general, a typical ice protection heater system involves multiple resistive zones running along the span of the aircraft component (e.g., along the span of the wing of the aircraft). The connection points between the wiring harness and the resistive zones are thus inside the area of the component (e.g., wing) that is to be protected from icing.

### BRIEF DESCRIPTION

The present invention provides for ice protection heater assemblies, and related methods of fabrication and use. More particularly, the present invention provides for chordwise ice protection heater assemblies for aircraft or the like.

The present invention provides for an ice protection heater assembly including an aircraft component having at least one resistive heater zone, each resistive heater zone extending from a first end to a second end, with a first electrical connection point positioned proximal to the first end and a second electrical connection point positioned proximal to the second end, and wherein each resistive heater zone extends in a chordwise direction of the aircraft component from the first end to the second end.

In embodiments, there are no resistive heater zones extending in a spanwise direction of the aircraft component.

In embodiments, each resistive heater zone is a substantially rectangular shape that extends in the chordwise direction of the aircraft component from the first end to the second end.

In embodiments, the aircraft component is a wing or an engine inlet.

In embodiments, electricity flows along each resistive heater zone in the chordwise direction of the aircraft component.

In embodiments, each first electrical connection point is positioned above and behind a stagnation point of the aircraft component, and each second electrical connection point is positioned below and behind the stagnation point of the aircraft component.

In embodiments, the first and second electrical connection points are outside or behind an area of the aircraft component to be protected from icing via the heater assembly.

In embodiments, each resistive heater zone is configured to protect an area of the aircraft component from icing.

In embodiments, each first and second electrical connection points do not require heating during heating of each resistive heater zone to protect an area of the aircraft component from icing.

In embodiments, a power density in each resistive heater zone is variable.

In embodiments, the assembly further includes a plurality of resistive heater zones, each resistive heater zone extending from the first end to the second end, with the first electrical connection point positioned proximal to the first end and the second electrical connection point positioned proximal to the second end.

In embodiments, each resistive heater zone comprises a carbon allotrope.

In embodiments, each resistive heater zone comprises a metal foil or wire.

The present invention provides for a method for fabricating an ice protection heater including providing an aircraft component having at least one resistive heater zone, each resistive heater zone extending from a first end to a second end, with a first electrical connection point positioned proximal to the first end and a second electrical connection point positioned proximal to the second end, and each resistive heater zone extending in a chordwise direction of the aircraft component from the first end to the second end, and operating each resistive heater zone to protect an area of the aircraft component from icing.

In embodiments, each resistive heater zone is a substantially rectangular shape that extends in the chordwise direction of the aircraft component from the first end to the second end, and where there are no resistive heater zones extending in a spanwise direction of the aircraft component.

In embodiments, the aircraft component is a wing or an engine inlet; and wherein each resistive heater zone comprises a carbon allotrope, or a metal foil or wire.

In embodiments, electricity flows along each resistive heater zone in the chordwise direction of the aircraft component, and where each first electrical connection point is positioned above and behind a stagnation point of the aircraft component, and each second electrical connection point is positioned below and behind the stagnation point of the aircraft component.

In embodiments, the first and second electrical connection points are outside or behind the area of the aircraft component to be protected from icing via the heater assembly.

In embodiments, each first and second electrical connection points do not require heating during heating of each resistive heater zone to protect an area of the aircraft component from icing.

In embodiments, a plurality of resistive heater zones are provided, each resistive heater zone extending from the first end to the second end, with the first electrical connection point positioned proximal to the first end and the second electrical connection point positioned proximal to the second end.

The above described and other features are exemplified by the following figures and detailed description.

Any combination or permutation of embodiments is envisioned. Additional features, functions and applications of the disclosed systems, assemblies and methods of the present disclosure will be apparent from the description which follows, particularly when read in conjunction with the appended figures.

### BRIEF DESCRIPTION OF THE DRAWINGS

The following figures are example embodiments wherein the like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed systems, assemblies and methods, reference is made to the appended figures, wherein:
FIG. 1 is a side perspective view of an existing heater layout for an aircraft component;
FIG. 2 is a side perspective view of an example heater layout for an aircraft component, according to the present disclosure;
FIG. 3 is a side perspective view of another example heater layout for an aircraft component, according to the present disclosure;
FIG. 4 is a side perspective view of an example engine inlet nose lip for use with the heater layouts of the present disclosure; and
FIGS. 5A and 5B are cross-sectional views of the example engine inlet nose lip of FIG. 4, and with FIG. 5A showing spanwise heaters, and with FIG. 5B showing chordwise heaters.

### DETAILED DESCRIPTION

The example embodiments disclosed herein are illustrative of ice protection heater assemblies for aircraft, and systems of the present disclosure and methods/techniques thereof. It should be understood, however, that the disclosed embodiments are merely examples of the present disclosure, which may be embodied in various forms. Therefore, details disclosed herein with reference to example ice protection heater assemblies and associated processes/techniques of fabrication/assembly and use are not to be interpreted as limiting, but merely as the basis for teaching one skilled in the art how to make and use the systems/assemblies and/or alternative systems/assemblies of the present disclosure.

The present disclosure provides for ice protection heater assemblies, and related methods of fabrication and use. More particularly, the present disclosure provides for chordwise ice protection heater assemblies for aircraft or the like.

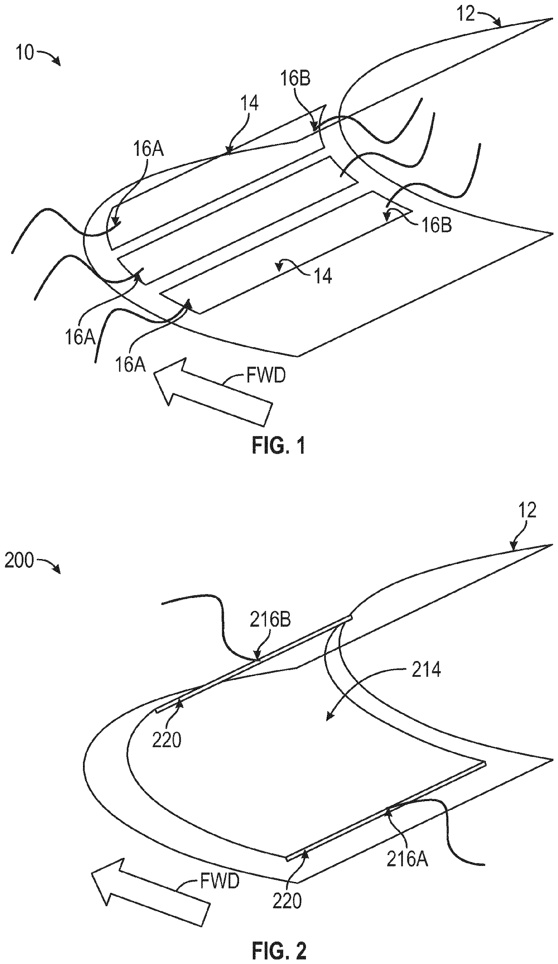

As shown in FIG. 1, a typical ice protection heater system/layout 10 involves multiple resistive heater zones 14 running along the span of the aircraft component 12 (e.g., along the span of the wing 12 of the aircraft). The electrical connection points 16A, 16B between the wiring harness and the resistive zones 14 are thus inside the area of the component 12 (e.g., wing 12) that is to be protected from icing. As such, FIG. 1 is a side perspective view of an existing heater layout 10 for an aircraft component 12.

As shown in FIG. 1, the wire connection points 16A, 16B are in the ice protection area. Overheating can occur if a connection point 16A, 16B is damaged. Moreover, large connection points 16A, 16B must be heated to prevent cold spots, and conventional practice provides some very complex ways to attempt to prevent cold spots. It is further noted that connection points 16A, 16B can be damaged (e.g., with hail or bird impacts, etc.). In general, each zone 14 has uniform power density.

FIG. 2 is a side perspective view of an example heater layout/assembly 200 for an aircraft component 12 (e.g., wing 12), according to the present disclosure. In general and as discussed further below, example heater assembly/layout 200 is a heater assembly 200 for aircraft or the like, with the heater assembly 200 configured to protect areas of aircraft component 12 from icing. In general, assembly 200 provides a straightforward resistive zone 214 design or layout.

The electrical connection points 216A, 216B of example heater assembly 200 are outside an ice protection zone of aircraft component 12. It is noted that the electrical connection points 216A, 216B of example assembly 200 do not need to be heated, in example embodiments. Moreover, the electrical connection points 216A, 216B can be made larger and more robust. Furthermore, the electrical connection points 216A, 216B in such positions are less likely to be damaged (e.g., via bird strike, hail, etc.).

It is noted that the power density in heater zone 214 can be varied or variable. For example, by varying the areal resistivity of the conductive material of zone 214, the power density in zone 214 can be varied or variable. As an example, the conductive material of zone 214 can be made thinner as needed or perforated, so that the power density in zone 214 can be varied or variable. One example embodiment of the heater would have more perforations in zone 214 near the forward-most edge of the component 12 where more heat is required and less perforations near connection points 216A and 216B.

As such, assembly 200 provides that the resistive heater zone 214 for the ice protection heater assembly 200 is designed such that the electricity mainly flows along the chord of the aircraft component 12 (e.g., wing 12). For the purposes of illustration, the "chordwise" direction on a circular component such as an inlet means the radial direction. This puts the electrical connection points 216A, 216B above and below as well as behind the stagnation point of the aircraft component 12. The connection points 216A, 216B are thus behind the area to be protected from icing via assembly 200.

The chordwise direction of the heater zone 214 means the connection points 216A, 216B are less likely to be damaged (e.g., by bird, hail, foreign object damage, service vehicles, etc.). Because they are outside the protected area, the connection points 216A, 216B do not need to be heated and can be made larger and more robust.

Moreover, assembly 200 of FIG. 2 provides a large zone 214 made using busbars 220 to spread current along the spanwise direction. In example embodiments, each busbar 220 should be much more conductive than the carbon resistive sheet.

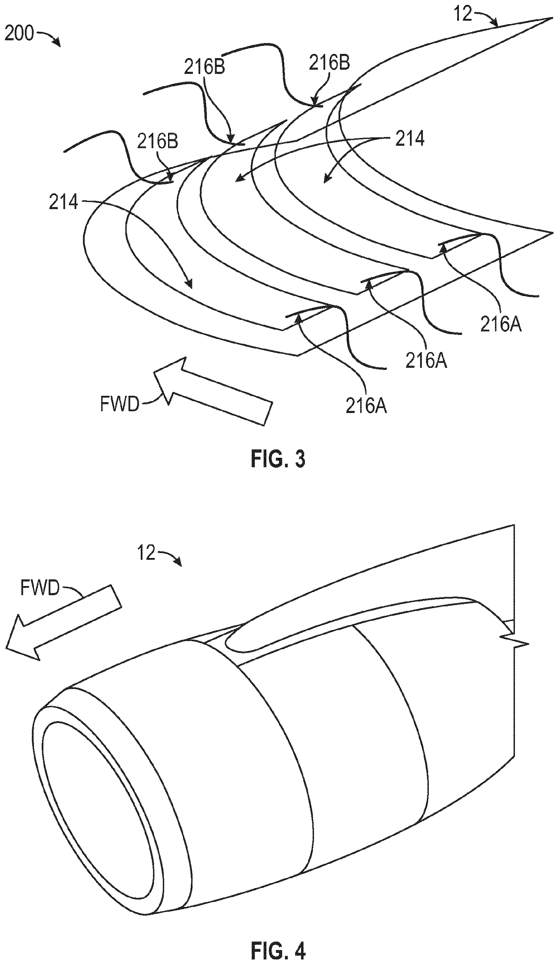

FIG. 3 is a side perspective view of another example heater assembly/layout 200 for an aircraft component 12 (e.g., wing 12), according to the present disclosure.

In general and as discussed further below, example heater assembly/layout 200 is a heater assembly 200 for aircraft or the like, with the heater assembly 200 configured to protect areas of aircraft component 12 from icing. In general, assembly 200 provides a straightforward resistive zone 214 design or layout.

The electrical connection points 216A, 216B of example heater assembly 200 are outside an ice protection zone of aircraft component 12. It is noted that the electrical connection points 216A, 216B of example assembly 200 do not need to be heated, in example embodiments. Moreover, the electrical connection points 216A, 216B can be made larger and more robust. Furthermore, the electrical connection points 216A, 216B in such positions are less likely to be damaged (e.g., via bird strike, hail, etc.).

It is noted that the power density in each heater zone 214 can be varied or variable. For example, by varying the areal resistivity of the conductive material of each zone 214, the power density in each zone 214 can be varied or variable. As an example, the conductive material of each zone 214 can be made thinner as needed or perforated, so that the power density in each zone 214 can be varied or variable.

As such, assembly 200 provides that the resistive heater zones 214 for the ice protection heater assembly 200 are designed such that the electricity mainly flows along the chord of the aircraft component 12 (e.g., wing 12). For the purposes of illustration, the "chordwise" direction on a circular component such as an inlet means the radial direction. This puts the electrical connection points 216A, 216B above and below as well as behind the stagnation point of the aircraft component 12. The connection points 216A, 216B are thus behind the area to be protected from icing via assembly 200.

The chordwise direction of the heater zones 214 means the connection points 216A, 216B are less likely to be damaged (e.g., by bird, hail, foreign object damage, service vehicles, etc.). Because they are outside the protected area, the connection points 216A, 216B do not need to be heated and can be made larger and more robust.

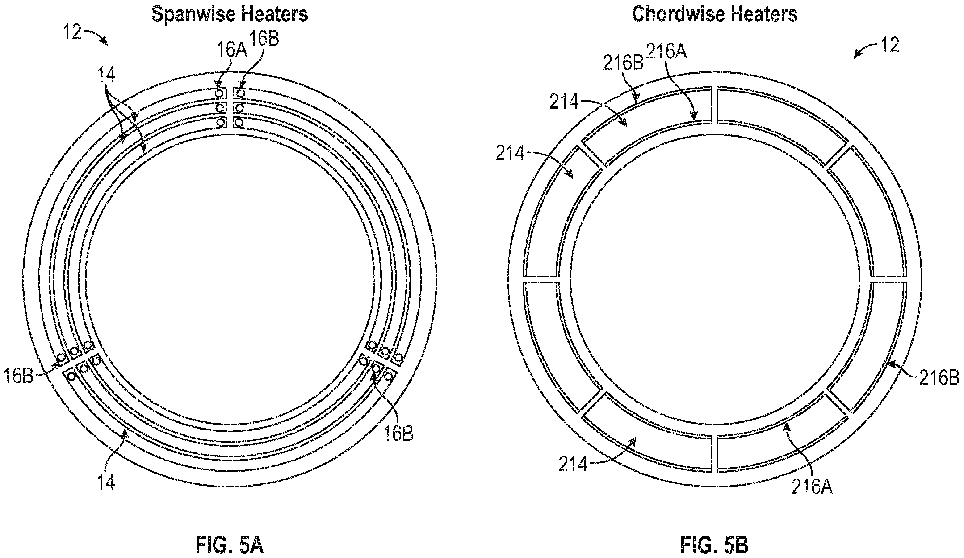

FIG. 4 is a side perspective view of an example aircraft component 12 taking the form of an example engine inlet nose lip 12 for use with the heater layouts 200 of the present disclosure. FIGS. 5A and 5B are cross-sectional views of the example engine inlet nose lip 12 of FIG. 4, and with FIG. 5A showing conventional spanwise heater zones 14, and with FIG. 5B showing example chordwise heater zones 214. The present disclosure notes some example engine inlets with three or four segments to form an engine inlet ring (e.g., FIG. 5A). It is noted that some challenges in previous research can be the joints between the engine inlet segments with all additional fastening designs can make it more challenging for bus bars of spanwise heaters to integrate with the joints, resulting in larger cold spots or bus bar connection failures in the long term thermal and mechanical enduring tests. The example chordwise configurations of the present disclosure can avoid these challenges. See FIG. 5B, for example, showing some additional benefits of chordwise configurations for segmentized engine inlets.

It is noted that the example chordwise heater zones 214 shown in FIGS. 3 and 5 can all be combined into one zone 214; a main intent of this present disclosure is about the location of the connection points 216A, 216B on a heater zone 214 (e.g., carbon allotrope heater zone 214) relative to the stagnation point of the aircraft component 12 (e.g., stagnation point of the leading edge of component 12).

It is also noted that the chordwise configuration of heater zones 214 can also simplify the design and installation of traditional heater materials (e.g., metal foil or wire for zones 214).

It is noted that some spanwise heaters are for anti-icing for the airfoils, or for deicing for airfoils except stagnation line parts being anti-icing during a de-icing on and off sequence schedule. Anti-icing can keep heaters on all time to prevent ice formation, and de-icing can turn on heaters after ice formation to apply heat to shed ice off. For the de-icing in a spanwise configuration, the heater zone on the stagnation line of the wing or engine inlet can be an anti-icer, and the rest of the area can be de-icers. In example embodiments of the present disclosure and for an example chordwise configuration, it can generally in some situations be difficult to have deicing while keeping only a stagnation line being ant-icing. As such, certain embodiments can limit example chordwise configurations of the present disclosure for substantially only anti-icing applications.

There are many benefits of the assemblies, systems and methods of the present disclosure, including, without limitation, the chordwise direction of the heater zones 214 means the connection points 216A, 216B are less likely to be damaged (e.g., by bird, hail, foreign object damage, service vehicles, etc.); because the connection points 216A, 216B are outside the protected area, the example connection points 216A, 216B do not need to be heated and can be made larger and more robust; and/or the heater assembly 200 is more repairable because the connection points 216A, 216B are less likely to be damaged.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Although the assemblies, systems and methods of the present disclosure have been described with reference to example embodiments thereof, the present disclosure is not limited to such example embodiments and/or implementations. Rather, the assemblies, systems and methods of the present disclosure are susceptible to many implementations and applications, as will be readily apparent to persons skilled in the art which fall within the scope of the claims.

## Claims

1. An ice protection heater assembly comprising:
an aircraft component (12) having at least one resistive heater zone, each resistive heater zone extending from a first end to a second end, with a first electrical connection point positioned proximal to the first end and a second electrical connection point positioned proximal to the second end; and
wherein each resistive heater zone extends in a chordwise direction of the aircraft component from the first end to the second end.

2. The assembly of claim 1, wherein there are no resistive heater zones extending in a spanwise direction of the aircraft component.

3. The assembly of claim 1 or 2, wherein each resistive heater zone is a substantially rectangular shape that extends in the chordwise direction of the aircraft component from the first end to the second end.

4. The assembly of any preceding claim, wherein the aircraft component is a wing or an engine inlet.

5. The assembly of any preceding claim, wherein electricity flows along each resistive heater zone in the chordwise direction of the aircraft component.

6. The assembly of any preceding claim, wherein each first electrical connection point is positioned above and behind a stagnation point of the aircraft component, and each second electrical connection point is positioned below and behind the stagnation point of the aircraft component, or wherein the first and second electrical connection points are outside or behind an area of the aircraft component to be protected from icing via the heater assembly; and optionally wherein each first and second electrical connection points do not require heating during heating of each resistive heater zone to protect an area of the aircraft component from icing.

7. The assembly of any preceding claim, wherein each resistive heater zone is configured to protect an area of the aircraft component from icing.

8. The assembly of any preceding claim, wherein a power density in each resistive heater zone is variable.

9. The assembly of any preceding claim, comprising a plurality of resistive heater zones, each resistive heater zone extending from the first end to the second end, with the first electrical connection point positioned proximal to the first end and the second electrical connection point positioned proximal to the second end.

10. The assembly of any preceding claim, wherein each resistive heater zone comprises a carbon allotrope, or wherein each resistive heater zone comprises a metal foil or wire.

11. A method for fabricating an ice protection heater comprising:
providing an aircraft component (12) having at least one resistive heater zone, each resistive heater zone extending from a first end to a second end, with a first electrical connection point positioned proximal to the first end and a second electrical connection point positioned proximal to the second end; and
each resistive heater zone extending in a chordwise direction of the aircraft component from the first end to the second end; and
operating each resistive heater zone to protect an area of the aircraft component from icing.

12. The method of claim 11, wherein each resistive heater zone is a substantially rectangular shape that extends in the chordwise direction of the aircraft component from the first end to the second end; and
wherein there are no resistive heater zones extending in a spanwise direction of the aircraft component.

13. The method of claim 11 or 12, wherein electricity flows along each resistive heater zone in the chordwise direction of the aircraft component; and
wherein each first electrical connection point is positioned above and behind a stagnation point of the aircraft component, and each second electrical connection point is positioned below and behind the stagnation point of the aircraft component.

14. The method of claim 11, 12 or 13, wherein the first and second electrical connection points are outside or behind the area of the aircraft component to be protected from icing via the heater assembly.

15. The method of claim 11, 12, 13 or 14, wherein each first and second electrical connection points do not require heating during heating of each resistive heater zone to protect an area of the aircraft component from icing.
